# EUROPÄISCHE PATENTSCHRIFT

(11) **EP 3 225 967 B1**
(45) Veröffentlichungstag und Bekanntmachung des Hinweises auf die Patenterteilung: **05.12.2018**
(21) Anmeldenummer: 16466007.8
(22) Anmeldetag: 07.04.2016
(51) Int. Cl.: G01M 13/04

(54) **VORRICHTUNG ZUR SCHADENSDIAGNOSTIK FÜR LANGSAM DREHENDE WÄLZLAGER**
A DEVICE FOR ERROR DIAGNOSIS OF LOW-SPEED BEARINGS
DISPOSITF DE DÉTECTION D'UN ENDOMMAGEMENT POUR UN ROULEMENT DE PALIER À ROTATION LENTE

(30) Priorität: 31.03.2016 CZ 20160186
(43) Veröffentlichungstag der Anmeldung: 04.10.2017
(73) Patentinhaber: Skoda Auto a.s., 29301 Mladá Boleslav (CZ)
(72) Erfinder: Oeljeklaus, Michael, CZ-11000 Praha (CZ); Pesik, Lubomir, CZ-46014 Liberec (CZ); Jancák, Marek, CZ-29306 Kosmonosy (CZ)

(56) Entgegenhaltungen:
- EP-A1- 2 226 621
- EP-A1- 2 498 076
- EP-A2- 1 612 458

## Beschreibung

### Technisches Gebiet

Die Erfindung betrifft eine Vorrichtung zur Schadensdiagnostik für langsam drehende Wälzlager.

### Bisheriger Stand der Technik

Bisher bekannte Lösungen der Schadensdiagnostik für langsam drehende Wälzlager, beschrieben z.B. in den Patentschriften JP56026226A2 oder JP3566002 B2, beruhen in der Regel auf den am Rahmen der Anlage in der Nähe der angeordneten einzelnen Wälzlager angebrachten Beschleunigungsgebern. In diesem Fall gehen die Vibrationen als Zeichen eines Lagerschadens infolge der geringeren Drehzahl im gemessenen Frequenzspektrum unter und die Schäden können insbesondere in einem frühen Stadium nicht korrekt erkannt werden.

Ferner sind Lösungen bekannt, wo Geber verwendet werden, die zum Maschinenrahmen angeschlossen sind und laufend die Position eines Punktes auf der Stirnfläche der Welle abtasten. In diesem Fall weicht die Trajektorie des Punktes an der Stirnfläche der Welle von der Kreisbahn erst bei einem fortgeschrittenen Schaden ab, in der Regel unmittelbar vor der Zerstörung des Lagers, was nachteilig ist.

In der EP 2 498 076 A1 ist ein Verfahren zur Verschleißüberwachung eines Getriebes in einem Kraftwerk beschrieben, wobei das Getriebe wenigstens eine erste Welle, wenigstens eine zweite Welle, Zahnräder und Lager umfasst. Bei dem Verfahren wird zunächst eine erste Winkelposition der ersten Welle durch einen ersten Drehwinkelgeber abgetastet. Ferner wird eine zweite Winkelposition der zweiten Welle durch einen zweiten Drehwinkelgeber abgetastet. Des Weiteren wird der Verschleiß des Getriebes auf Basis von Differenzen der abgetasteten Winkelpositionen der ersten Welle und der zweiten Welle überwacht und ein Zustandssignal erzeugt, das repräsentativ für den Verschleiß des Getriebes auf Basis der überprüften Differenzen ist.

In der EP 2 226 621 A1 ist ein Verfahren zum Vorhersagen eines Fehlers in einem Wälzlager beschrieben. Das Wälzlager weist Innen- und Außenringe und zwischen diesen gleichmäßig winklig verteilte Wälzkörper auf. Bei dem Verfahren wird ein Positionssignal, das eine relative Winkelposition des Innenrings in Bezug auf die Außenringe angibt, und ein Vibrationssignal, das auf geschwindigkeitsbedingte Schwingungen im Wälzlager hinweist, verarbeitet, so dass sie entweder einer Winkelverschiebung der Wälzkörper, die einer ganzzahligen Anzahl von Winkelspalten zwischen benachbarten Wälzkörpern entspricht, oder einer ganzzahligen Anzahl von ganzen Umdrehungen des Innenrings in Bezug auf den Außenring entsprechen. Ferner erfolgt bei dem Verfahren eine Raumabtastung des verarbeiteten Schwingungssignals auf der Grundlage des verarbeiteten Positionssignals und eine Voraussage eines Fehlers im Wälzlager auf der Basis des raumabgetasteten Schwingungssignals.

In der EP 1 612 458 A2 ist ein Getriebezustandsüberwachungssystem beschrieben. Das Getriebezustandsüberwachungssystem umfasst mindestens einen Schwingungssensor, der auf einem Getriebegehäuse angeordnet ist, eine Auswerteeinheit, welche mit dem Schwingungssensor gekoppelt und so konfiguriert ist, dass sie Signale empfängt, die repräsentativ für die detektierten Schwingungen des Schwingungssensors sind. Die Auswerteeinheit kann so betrieben werden, dass sie die Signale, die für Schwingungen von Getrieben und Lagern repräsentativ sind, verarbeitet und mindestens einen dynamischen Energieindex oder Fehlerort berechnet.

### Darstellung der Erfindung

Die Aufgabe wird durch eine Vorrichtung zur Schadensdiagnostik für langsam drehende Wälzlager gelöst, die durch einen Rahmen gebildet wird, in dem eine über ein Antriebsrad angetriebene Welle angeordnet ist, die wenigstens ein Wellenlager aufweist. Die Darstellung der Erfindung liegt darin, dass die Vorrichtung ferner ein Lager und ein Referenzelement umfasst, wobei das Referenzelement in dem Lager gelagert und an dem Wellenlager angeordnet ist, wobei das Lager zum Rahmen befestigt ist, wobei mit Hilfe dessen das Referenzelement drehbar gegenüber dem Rahmen gelagert ist. Das Referenzelement ist also sowohl gegenüber der Welle, wie auch gegenüber dem Rahmen frei drehbar. Das Referenzelement ist ferner zwischen dem Wellenlager und dem Lager drehbar angeordnet, dass sich bei einer Beschädigung des Wellenlagers das Referenzelement zusammen mit der Welle dreht.

Der Lagerschaden wird in einem frühen Stadium mittels des Positionsgebers signalisiert, der zwischen dem Referenzelement und dem Rahmen angeordnet ist.

In einer alternativen erfindungsgemäßen Ausführung ist das Referenzelement mit einem Alternativantrieb gekoppelt, mittels dem das rotierende Referenzelement Vibrationen auslöst, die vom Vibrationsgeber aufgenommen werden, der am Rahmen im Bereich des Lagers des Referenzelementes und des Wellenlagers angeordnet ist.

In einer vorteilhaften erfindungsgemäßen Ausführung wird das Referenzelement aus Einbaugründen durch zwei Teile gebildet, die mit einem Bindeglied lösbar verbunden sind.

### Übersicht der Figuren der Zeichnungen

Die Erfindung wird anhand der Ausführungsbeispiele gemäß den beigefügten Zeichnungen näher erläutert, in denen zeigen die Fig. 1 die Vorrichtung zur Schadensdiagnostik für langsam drehende Wälzlager in einer Schnittdarstellung, die Fig. 2 die alternative Ausführung der Vorrichtung zur Schadensdiagnostik für langsam drehende Wälzlager in einer Schnittdarstellung, die Fig. 3 die Vorrichtung zur Schadensdiagnostik für langsam drehende Wälzlager in einer vorteilhaften Aufbauanordnung in einer Schnittdarstellung und die Fig. 4 die alternative Ausführung der Vorrichtung zur Schadensdiagnostik für langsam drehende Wälzlager in einer vorteilhaften Aufbauanordnung in einer Schnittdarstellung.

### Ausführungsbeispiel der Erfindung

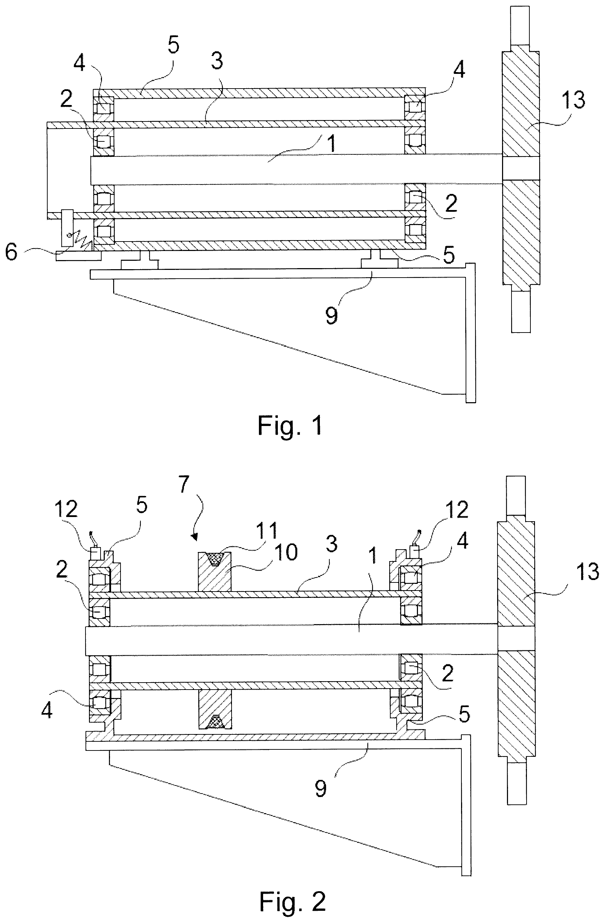

Die Fig. 1 zeigt die Vorrichtung zur Schadensdiagnostik für langsam drehende Wälzlager, die gebildet wird durch einen Rahmen 1, der an der Konsole 9 befestigt ist, wobei im Rahmen 5 die Welle 1 angeordnet ist, die in den Wellenlagern 2 gelagert ist. An den Wellenlagern 2 ist ein Referenzelement 3 angeordnet, das die Lager 4 aufweist, mittels deren das Referenzelement 3 drehbar gegenüber dem Rahmen 5 angeordnet ist. Das Referenzelement 3 ist also sowohl gegenüber der Welle 1, wie auch gegenüber dem Rahmen 5 frei drehbar. Zum Rahmen 5 ist ein Positionsgeber 6 befestigt, der mit dem Referenzelement 3 verknüpft ist. An der Welle 1 ist ein Antriebsrad 13 angeordnet, das Bestandteil eines näher nicht spezifizierten Antriebsmechanismus (nicht dargestellt) ist.

Die Fig. 2 zeigt die Vorrichtung zur Schadensdiagnostik für langsam drehende Wälzlager in einer alternativen erfindungsgemäßen Ausführung. Die Vorrichtung wird gebildet durch den an der Konsole 9 befestigten Rahmen 5, in dem die Welle 1 angeordnet ist, welche in den im Referenzelement 3 angeordneten Wellenlagern 2 gelagert ist. Das Referenzelement ist in den Lagern 4 gelagert, die zum Rahmen 5 befestigt sind. Die beschriebene Anordnung stellt sicher, dass das Referenzelement 3 sowohl gegenüber der Welle 1, wie auch gegenüber dem Rahmen 5 frei drehbar ist. Die Vorrichtung umfasst weiter einen Alternativantrieb 7, der mit dem Referenzelement 3 gekoppelt ist. Die Kopplung des Referenzelementes 3 mit dem Alternativantrieb 7 ist mittels einer angetriebenen Riemenscheibe 10 mit Riemen 11 sichergestellt. An dem Rahmen 5 in der Nähe der Lagerung der Wellenlager 2 und der Lager 4 sind die Vibrationsgeber 12 angeordnet. An der Welle 1 ist ein Antriebsrad 13 angeordnet, das Bestandteil eines näher nicht spezifizierten Antriebsmechanismus (nicht dargestellt) ist.

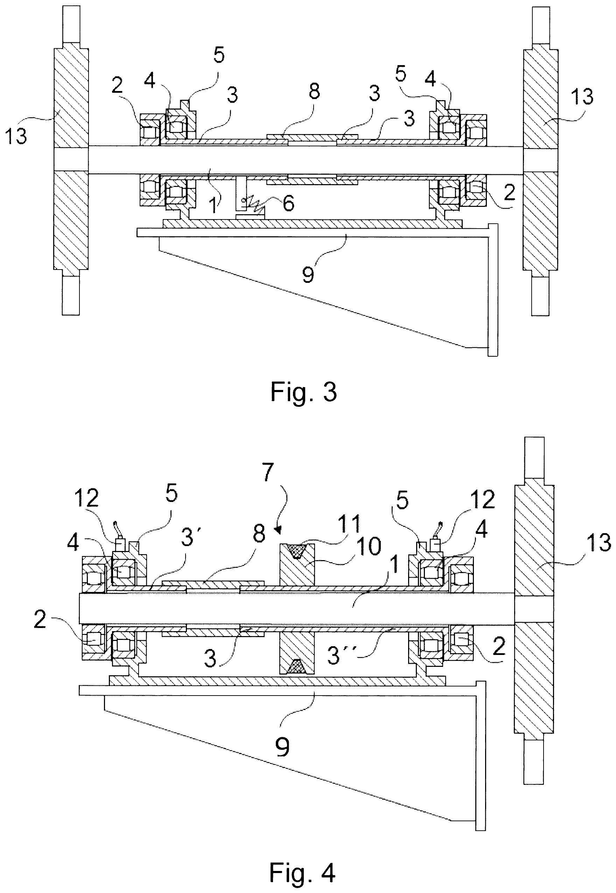

Aus Konstruktionsgründen kann das Referenzelement 3 aus zwei Teilen 3', 3" bestehen, die lösbar mittels eines Bindeglieds 8 (s. Fig. 3 und 4) verbunden sind.

Während des Betriebes der Vorrichtung zur Schadensdiagnostik für langsam drehende Wälzlager (Fig. 1, 3) wird über das Antriebsrad 13 die Welle 1 angetrieben, die sich in den Wellenlagern (2) dreht, wobei sich das Referenzelement 3, das drehbar zwischen den Wellenlagern 2 und den Lagern 4 angeordnet und über den Positionsgeber 6 mit dem Rahmen 5 verbunden ist, nicht bewegt. Bei Entstehung einer Beschädigung der Wellenlager 2 steigt deren Rollwiderstand, so dass das Referenzelement 3 zusammen mit der Welle 1 gedreht wird. Die Bewegung des Referenzelementes 3 wird durch den Bewegungsgeber 6 aufgenommen und ausgewertet, so dass die Beschädigung des Wellenlagers 2 bereits in einem Frühstadium signalisiert wird. Bei einer Beschädigung der Lager 4, in denen das Referenzelement 3 gegenüber dem Rahmen 5 gelagert ist, wird durch die beschränkte Beweglichkeit des Referenzelementes 3 die Beschädigung des Lagers 4 bereits in einem frühen Stadium signalisiert.

In einer alternativen erfindungsgemäßen Ausführung (Fig. 2, 4) ist das Referenzelement 3 mit einem Alternativantrieb 7 mit vordefinierter höheren Drehzahl als die Drehzahl der Welle 1 gekoppelt. Diese Drehzahl bewirkt in Abhängigkeit von der Beschädigung der Wellenlager 2 oder der Lager 4 ausreichend intensive Vibrationen, die von den Vibrationsgebern 12 aufgenommen und nachfolgend ausgewertet werden.

## Patentansprüche

1. Vorrichtung zur Schadensdiagnostik für langsam drehende Wälzlager gebildet durch einen Rahmen (5), in dem über ein Antriebsrad (13) angetriebene Welle (1) gelagert ist, an der wenigstens ein Wellenlager (2) angeordnet ist, **dadurch gekennzeichnet, dass** die Vorrichtung ferner ein Lager (4) und ein Referenzelement (3) umfasst, wobei das Referenzelement (3) in dem Lager (4) gelagert und an dem Wellenlager (2) angeordnet ist, wobei das Lager (4) am Rahmen (5) befestigt ist, wobei mittels dem Lager (4) das Referenzelement (3) drehbar gegenüber dem Rahmen (5) angeordnet ist, wobei das Referenzelement (3) zwischen dem Wellenlager (2) und dem Lager (4) drehbar angeordnet ist, dass sich bei einer Beschädigung des Wellenlagers (2) das Referenzelement (3) zusammen mit der Welle (1) dreht, und wobei mit dem Referenzelement (3) ein Positionsgeber (6) verknüpft ist, der an dem Rahmen (5) befestigt ist.

2. Vorrichtung zur Schadensdiagnostik für langsam drehende Wälzlager nach Anspruch 1 **dadurch gekennzeichnet, dass** das Referenzelement (3) mit einem Alternativantrieb (7) gekoppelt ist.

3. Vorrichtung zur Schadensdiagnostik für langsam drehende Wälzlager nach Anspruch 2 **dadurch gekennzeichnet, dass** am Rahmen (5) an der Stelle der Lagerung der Wellenlager (2) und der Lager (4) ein Vibrationsgeber (12) angeordnet ist.

4. Vorrichtung zur Schadensdiagnostik für langsam drehende Wälzlager nach einem der Ansprüche 1 bis 3 **dadurch gekennzeichnet, dass**
das Referenzelement (3) aus zwei Teilen (3', 3' ') besteht, die mit einem Bindeglied (8) lösbar verbunden sind.

## Claims

1. A device for damage diagnostics for slowly rotating rolling bearings formed by a frame (5), in which a shaft (1) driven by means of a drive wheel (13) is mounted, on which shaft at least one shaft bearing (2) is arranged, **characterized in that** the device additionally comprises a bearing (4) and a reference element (3), wherein the reference element (3) is mounted in the bearing (4) and is arranged on the shaft bearing (2), wherein the bearing (4) is attached to the frame (5), wherein by means of the bearing (4) the reference element (3) is arranged rotatably relative to the frame (5), wherein the reference element (3) is arranged rotatably between the shaft bearing (2) and the bearing (4), that in the event of a damaging of the shaft bearing (2) the reference element rotates together with the shaft (1) and wherein a position sensor (6) is connected with the reference element (3), which is attached to the frame (5).

2. A device for damage diagnostics for slowly rotating rolling bearings according to Claim 1, **characterized in that** the reference element (3) is coupled with an alternative drive (7).

3. A device for damage diagnostics for slowly rotating rolling bearings according to Claim 2, **characterized in that** a vibration sensor (12) is arranged on the frame (5) at the location of the mounting of the shaft bearing (2) and the bearing (4).

4. A device for damage diagnostics for slowly rotating rolling bearings according to any one of Claims 1 to 3, **characterized in that** the reference element (3) consists of two parts (3', 3"), which are detachably connected to a connecting link (8).

## Revendications

1. Dispositif de diagnostic de dommages pour des paliers à roulements à rotation lente, constitué d'un châssis (5), dans lequel est logé un arbre (1) entraîné par l'intermédiaire d'une roue d'entraînement (13), sur lequel est disposé au moins un palier d'arbre (2), **caractérisé en ce que** le dispositif comprend en outre un palier (4) et un élément de référence (3), l'élément de référence (3) étant logé dans le palier (4) et étant disposé sur palier d'arbre (2), le palier (4) étant fixé sur le châssis (5), l'élément de référence (3) étant disposé de manière rotative par rapport au châssis (5) grâce au palier (4), l'élément de référence (3) étant disposé de manière rotative entre le palier d'arbre (2) et le palier (4), **en ce que**, lors d'un endommagement du palier d'arbre (2), l'élément de référence (3) tourne conjointement avec l'arbre (1) et, à l'élément de référence (3), est associé un capteur de position (6) qui est fixé au châssis (5).

2. Dispositif de diagnostic de dommages pour des paliers à roulements à rotation lente selon la revendication 1, **caractérisé en ce que** l'élément de référence (3) est couplé avec un dispositif d'entraînement alternatif (7).

3. Dispositif de diagnostic de dommages pour des paliers à roulements à rotation lente selon la revendication 2, **caractérisé en ce que**, sur le châssis (5), à l'endroit du logement des paliers d'arbres (2) et des paliers (4), est disposé un capteur de vibrations (12).

4. Dispositif de diagnostic de dommages pour des paliers à roulements à rotation lente selon l'une des revendications 1 à 3, **caractérisé en ce que** l'élément de référence (3) est constitué de deux parties (3', 3") qui sont reliées de manière amovible avec un organe de liaison (8).
